# EUROPÄISCHE PATENTSCHRIFT

(11) **EP 0 806 588 B1**
(45) Veröffentlichungstag und Bekanntmachung des Hinweises auf die Patenterteilung: **21.06.2000**
(21) Anmeldenummer: 96118809.1
(22) Anmeldetag: 23.11.1996
(51) Int. Cl.: F16F 13/14

(54) **Hydrobuchse**
Hydraulically damped bushing
Manchon à amortissement hydraulique

(30) Priorität: 09.05.1996 DE 19618688
(43) Veröffentlichungstag der Anmeldung: 12.11.1997
(73) Patentinhaber: Firma Carl Freudenberg, 69469 Weinheim (DE)
(72) Erfinder: Rudolph, Axel, 64625 Bensheim (DE)

(56) Entgegenhaltungen:
- EP-A- 0 199 240
- EP-A- 0 503 654
- DE-A- 3 431 460
- US-A- 4 790 520
- US-A- 4 899 997
- PATENT ABSTRACTS OF JAPAN vol. 13, no. 310 (M-850) [3658] , 14.Juli 1989 & JP 01 098718 A (MARUGO RUBBER), 17.April 1989,

## Beschreibung

### Technisches Gebiet

Die Erfindung betrifft eine Hydrobuchse mit zumindest zwei flüssigkeitsgefüllten Arbeitskammern, die durch einen Dämpfungskanal strömungsleitend miteinander verbunden sind, umfassend einen inneren Stützkörper, der von einem äußeren Stützkörper mit radialem Abstand umschlossen ist, wobei in dem durch den Abstand gebildeten Spalt ein Federkörper aus elastomerem Werkstoff angeordnet ist, und wobei in zumindest einer der Arbeitskammern zumindest ein separat erzeugtes Einlegeteil angeordnet ist.

### Stand der Technik

Eine solche Hydrobuchse ist aus der DE 34 31 460 C2 bekannt. In zumindest einer der Arbeitskammern der vorbekannten Hydrobuchse ist ein steifes Anschlagelement vorgesehen, um ein übermäßiges Versetzen des inneren und äußeren Stützkörpers relativ zueinander in radialer Richtung zu verhindern. Das Anschlagelement ist frei beweglich innerhalb der Arbeitskammern angeordnet.

Der Stand der Technik gemäß Oberbegriff des Anspruchs 1 ist aus der EP-A-503 654 bekannt.

Der Erfindung liegt die Aufgabe zugrunde, eine Hydrobuchse der vorbekannten Art derart weiterzuentwickeln, daß diese eine höhere Dämpfung und eine geringere dynamische Federrate aufweist.

### Darstellung der Erfindung

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe sind die kennzeichnenden Merkmale des Anspruchs 1 vorgesehen.

Durch die erfindungsgemäße Ausgestaltung des Einlegeteils und des Federkörpers sowie deren Zuordnung zueinander innerhalb der Hydrobuchse wird einerseits eine ausgezeichnete Dämpfung und andererseits eine Absenkung der dynamischen Federraten erreicht. Bei einer relativen Radialverlagerung des inneren und äußeren Schutzkörpers zueinander werden Flüssigkeitsbestandteile von der ersten Arbeitskammer durch den Dämpfungskanal in die zweite Arbeitskammer verlagert. Außerdem findet eine Flüssigkeitsverlagerung innerhalb der drei Teilkammern durch die beiden Drosselöffnungen statt. Eine Absenkung der dynamischen Federrate wird dadurch bewirkt, daß anteilige Flüssigkeitsmassen mit Bereichen des Federkörpers in Resonanz geraten und gegenüber der Anregung phasenverschoben schwingen. Dieser beschriebene Effekt bildet sich in der X-, Y- und Z-Richtung aus. Die X-Richtung erstreckt sich parallel zur Achse der Hydrobuchse, während die Y- und Z-Richtung senkrecht zueinander angeordnet sind und eine Ebene beschreiben. Die Frequenzlagen dieser Absenkungen hängen u.a. stark von den Quersschnitten der Drosselöffnungen ab, die wiederum im wesentlichen von der Kontur des Einlegeteils abhängig sind. Durch die Ausgestaltung des Einlegeteils ist es so möglich, die Absenkungen der dynamischen Federraten weitestgehend unabhängig voneinander in den verschiedenen Raumrichtungen einzustellen, ohne andere Eingenschaften der Hydrobuchse nachteilig zu beeinflussen. Das Anbringen von Bohrungen oder Durchbrüchen im Einlegeteil in X- und/oder Y- und/oder Z- Richtung ist eine weitere sehr gute Möglichkeit zur Abstimmung. Weiterhin ist von Vorteil, daß das Einlegeteil mit nahezu allen bekannten Hydrobuchsenbauformen kombinierbar ist.

Das Einlegeteil und/oder der Federkörper können auf den einander zugewandten Seiten eine Oberflächenprofilierung aufweisen. Hierbei ist von Vorteil, daß Anschlaggeräusche und/oder Kavitation bei extremen Relativverlagerungen der beiden Stützkörper zueinander und daraus resultierende Berührung des Einlegeteils und des vom Federkörper vollständig umschlossenen inneren Stützkörpers vermieden werden.

Das Einlegeteil kann elastisch nachgiebig innerhalb der ersten Arbeitskammer angeordnet sein. Die bevorzugt lose Anordnung des Einlegeteils innerhalb der ersten Arbeitskammer ist von Vorteil, da das Einlegeteil bei Einleitung höherfrequenter, kleinamplitudiger Schwingungen die Funktionen eines Tilgers aufweist. Die erfindungsgemäße Hydrobuchse bewirkt dann eine ausgezeichnete Dämpfung tieffrequenter, großamplitudiger und eine ausgezeichnete Isolierung höherfrequenter, kleinamplitudiger Schwingungen.

Das Einlegeteil ist als Multifunktionsteil ausgebildet, wobei eine seiner Funktionen darin besteht, einen wegbegrenzenden Anschlag zu bilden, um eine mechanische Überlastung des Federkörpers zu vermeiden. Die Hydrobuchse weist dadurch gleichbleibend gute Gebrauchseigenschaften während einer langen Gebrauchsdauer auf.

Vorteilhaft besteht das Einlegeteil aus einem polymeren Werkstoff. Die Herstellung des Einlegeteils ist daher in fertigungstechnischer und wirtschaftlicher Hinsicht einfach und kostengünstig durchführbar.

Das Einlegeteil und der äußere Stützkörper begrenzen einen Flüssigkeitsdurchtritt von der ersten Arbeitskammer in den Dämpfungskanal. Hierbei ist von Vorteil, daß durch die Ausgestaltung des Einlegeteils der Querschnitt des Flüssigkeitsdurchtritts besonders einfach an die jeweiligen Gegebenheiten des Anwendungsfalles anzupassen ist. Des weiteren ist die Verwendung eines zweiten Einlegeteiles in der zweiten Arbeitskammer von Vorteil und erlaubt es, z.B. bei gleichbleibenden dynamischen Federraten die Dämpfung in Z-Richtung weiter zu erhöhen.

### Kurzbeschreibung der Zeichnung

Zwei Ausführungsbeispiele einer erfindungsgemäßen Hydrobuchse werden nachfolgend anhand der Figuren 1 bis 4 näher erläutert.

Es zeigen:

Figur 1: einen Querschnitt durch das erste Ausführungsbeispiel entlang der Linie A-A aus Figur 2.

Figur 2: einen Längsschnitt durch die Hydrobuchse gemäß Figur 1 entlang der Linie B-B-aus Figur 1.

Figur 3: einen Querschnitt durch das zweite Ausführungsbeispiel entlang der Linie C-C aus Figur 4.

Figur 4: einen Längssschnitt durch die Hydrobuchse gemäß Figur 3 entlang der Linie D-D.

### Ausführung der Erfindung

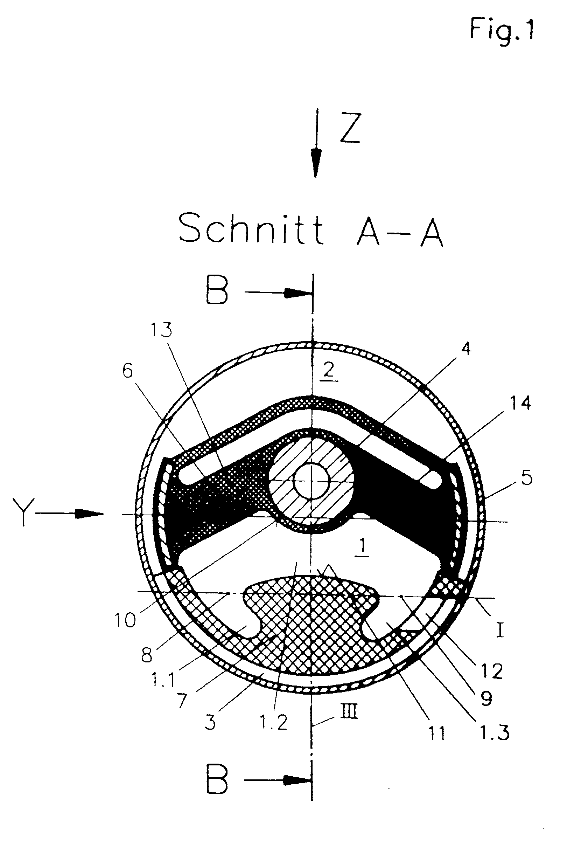

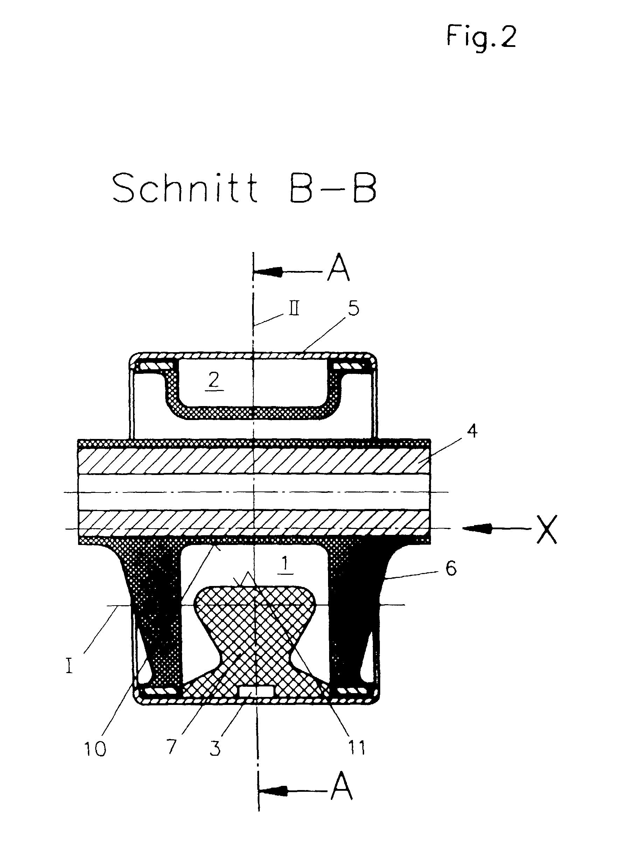

In Figur 1 ist die Hydrobuchse des ersten Ausführungsbeispiels in quergeschnittener Darstellung gezeigt. Der innere und der äußere Stützkörper 4,5 bestehen aus einem metallischen Werkstoff und sind durch den Federkörper 6 aus elastomerem Werkstoff aufeinander abgestützt. Die Hydrobuchse ist in den Figuren 1 und 2 unter statischer Last gezeigt, wobei der Federkörper 6 unter elastischer Vorspannung innerhalb des äußeren Stützkörpers 5 angeordnet ist. Der innere Stützkörper 4,der exzentrisch zum äußeren Stützkörper 5 angeordnet ist, ist vom elastomeren Werkstoff des Federkörpers vollständig umschlossen. Der äußere Stutzkörper 5 umfaßt ein Fensterrohr, wobei der äußere Stützkörper 5 und das Fensterrohr ortsfest miteinander verbunden sind und gemeinsam einen Dämpfungskanal 3 begrenzen.

Die beiden Arbeitskammern 1,2 sind mit einer inkompressiblen Dämpfungsflüssigkeit gefüllt und strömungsleitend durch den Dämpfungskanal 3 miteinander verbunden. Die Federstege 13, 14 sind in diesem Ausführungsbeispiel im wesentlichen rechtwinklig zueinander angeordnet und begrenzen eine im wesentlichen dreieckförmige erste Arbeitskammer 1. Innerhalb der ersten Arbeitskammer 1 ist das aus einem polymeren Werkstoff bestehende Einlegeteil 7 angeordnet, das einen im wesentlichen eiförmigen Querschnitt aufweist. Durch die Anordnung der beiden Federstege 13, 14, des inneren Stützkörpers und des inneren Einlegeteils 7 zueinander, werden innerhalb der ersten Arbeitskammer 1 drei Teilkammern 1.1, 1.2, 1.3 gebildet. Die erste und die zweite Teilkammer 1.1, 1.2 sind durch die erste Drosselöffnung 8, die zweite und die dritte Teilkammer 1.2, 1.3 durch die zweite Drosselöffnung 9 flüssigkeitsleitend miteinander verbunden. Die dritte Teilkammer 1.3 ist durch den Flüssigkeitsdurchtritt 12 mit dem Dämpfungskanal 3 verbunden. Der Flüssigkeitsdurchtritt 12 ist durch den äußeren Stützkörper 5 und durch das Einlegeteil 7 begrenzt. Hierbei ist von Vorteil, daß bei ansonsten gleicher Ausgestaltung der Hydrobuchse durch die Verwendung voneinander abweichender Einlegeteile die Gebrauchseigenschaften der Hydrobuchse an die jeweiligen Gegebenheiten des Anwendungsfalles problemlos angepaßt werden können. Dieses Baukastenprinzip ist im Hinblick auf eine einfache Herstellung von Hydrobuchsen mit unterschiedlichen Gebrauchseigenschaften von Vorteil.

In diesem Ausführungsbeispiel ist es vorgesehen, daß das Einlegeteil 7 auf der dem Federteil zugewandten Seite 11 mit einer Oberflächenprofilierung versehen ist, um Anschlaggeräusche bei Extremauslenkungen des inneren und äußeren Stützkörpers 4,5 zueinander zu vermeiden.

Eine Absenkung der dynamischen Federrate wird dadurch bewirkt, daß anteilige Flüssigkeitsmassen mit Bereichen des Federkörpers 6 in Resonanz geraten und gegenüber der Anregung phasenverschoben schwingen. Dieser Effekt bildet sich in X-, Y- und Z-Richtung aus. Die unterschiedlichen Richtungen sind in den Zeichnungen durch Pfeile gekennzeichnet. Durch die Kontur des Anlegeteils werden die Querschnitte der Drosselöffnungen 8,9 bestimmt, die für die Frequenzlage der Absenkungen verantwortlich sind. Die wirksamen Querschnitte befinden sich jeweils zwischen Einlegeteil 7 und Federkörper 6 und im wesentlichen für eingeleitete hochfrequente Schwingungen in Z-Richtung in der Ebene I, in X-Richtung in der Ebene II und in Y-Richtung in der Ebene III.

Die gezeigte Hydrobuchse weist eine ausgezeichnete Dämpfung auf. Bei Einleitung von Schwingungen radial in Z-Richtung, verlagern sich Flüssigkeitsbestandteile aus der zweiten Teilkammer 1.2 durch die angrenzenden Drosselöffnungen 8,9 in die erste 1.1 und dritte Teilkammer 1.3, was zu einer Ausbauchung der beiden Federstege 13,14 und einer Flüssigkeitsverlagerung aus der dritten Teilkammer 1.3 durch den Flüssigkeitsdurchtritt 12 in den Dämpfungskanal 3 und somit in die zweite Arbeitskammer 2 führt.

In Figur 2 ist ein Längsschnitt entlang der Linie A-A aus Figur 1 gezeigt.

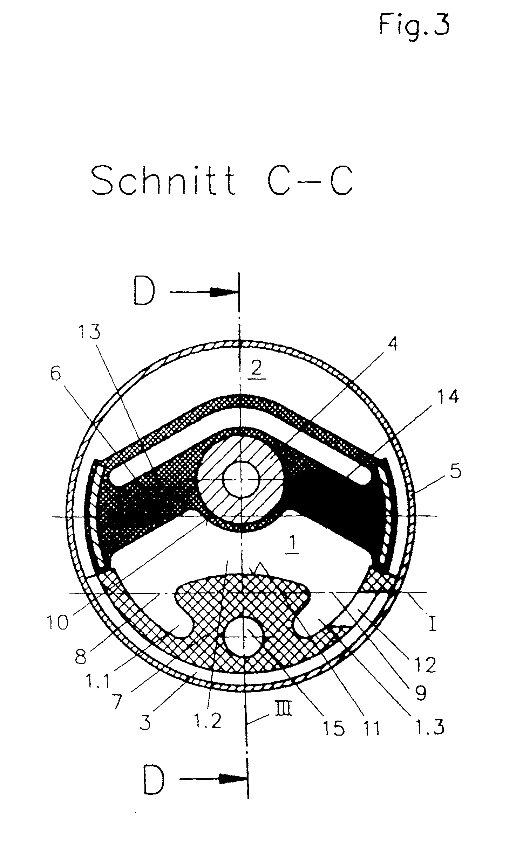

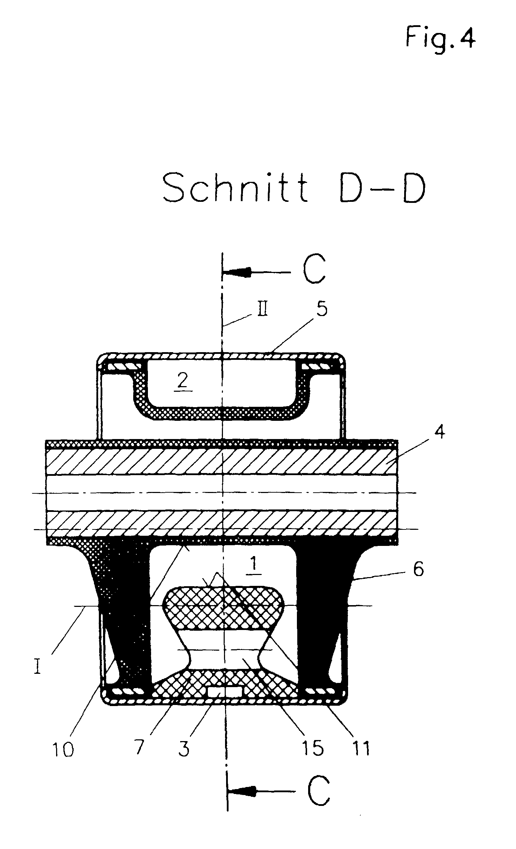

In den Figuren 3 und 4 ist das zweite Ausführungsbeispiel gezeigt, das sich vom ersten Ausführungsbeispiel aus den Figuren 1 und 2 durch die Ausführung des Einlegeteils 7 unterscheidet. Das Einlegeteil 7 ist mit einer Bohrung 15 versehen, die sich parallel zur Achse des inneren Stützkörpers 4 erstreckt. Dadurch ist eine sehr gute Möglichkeit zur Abstimmung der Gebrauchseigenschaften gegeben.

## Patentansprüche

1. Hydrobuchse mit zumindest zwei flüssigkeitsgefüllten Arbeitskammern, die durch einen Dämpfungskanal strömungsleitend miteinander verbunden sind, umfassend einen inneren Stützkörper, der von einem äußeren Stützkörper mit radialem Abstand umschlossen ist, wobei in dem durch den Abstand gebildeten Spalt ein Federkörper aus elastomerem Werkstoff angeordnet ist und wobei in zumindest einer der Arbeitskammern zumindest ein separat erzeugtes Einlegeteil angeordnet ist, wobei der Federkörper (6) im radialen Schnitt einen im wesentlichen V-förmigen Querschnitt aufweist und die erste Arbeitskammer (1) begrenzt, daß das Einlegeteil (7) innerhalb der V-förmig begrenzten ersten Arbeitskammer (1) angeordnet ist, einen im wesentlichen Ω-förmigen Radialquerschnitt aufweist **dadurch gekennzeichnet, daß** das Einlegeteil (7) in der ersten Arbeitskammer (1) so angeordnet ist, daß es die erste Arbeitskammer (1) in drei Teilkammern (1.1, 1.2, 1.3) teilt und daß die Teilkammern (1.1, 1.2, 1.3) durch zwei vom Federkörper (6) und dem Einlegeteil (7) begrenzten Drosselöffnungen (8,9) strömungsleitend miteinander verbunden sind.

2. Hydrolager nach Anspruch 1, dadurch gekennzeichnet, daß das Einlegeteil (7) und/oder der Federkörper (6) auf den einander zugewandten Seiten (10,11) eine Oberflächenprofilierung aufweisen.

3. Hydrolager nach einem der Ansprüche 1 oder 2, dadurch gekennzeichnet, daß das Einlegeteil (7) elastisch nachgiebig innerhalb der ersten Arbeitskammer (1) angeordnet ist.

4. Hydrolager nach einem der Ansprüche 1 bis 3, dadurch gekennzeichnet, daß das Einlegeteil (7) als wegbegrenzender Anschlag ausgebildet ist.

5. Hydrolager nach einem der Ansprüche 1 bis 4, dadurch gekennzeichnet, daß das Einlegeteil (7) aus einem polymeren Werkstoff besteht.

6. Hydrolager nach einem der Ansprüche 1 bis 5, dadurch gekennzeichnet, daß das Einlegeteil (7) und der äußere Stützkörper (5) einen Flüssigkeitsdurchtritt (12) von der ersten Arbeitskammer (1) in den Dämpfungskanal (3) begrenzen.

## Claims

1. A hydraulic bushing with at least two fluid-filled working chambers, which are connected to one another in a flow-conducting manner by a damping passage, comprising an inner supporting body which is surrounded with radial clearance by an outer supporting body, a spring body made of elastomeric material being arranged in the gap formed by the clearance, and at least one separately produced insert being arranged in at least one of the working chambers, in radial section the spring body (6) having an essentially V-shaped cross section and delimiting the first working chamber (1), and the insert (7) being arranged within the first working chamber (1) bounded by a V shape and having an essentially Ω-shaped radial cross section, characterized in that the insert (7) is arranged in such a way in the first working chamber (1) that it divides the first working chamber (1) into three subchambers (1.1, 1.2, 1.3), and in that the subchambers (1.1, 1.2, 1.3) are connected to one another in a flow-conducting manner by two restriction openings (8, 9) bounded by the spring body (6) and the insert (7).

2. A hydraulic bushing according to claim 1, characterized in that the insert (7) and/or the spring body (6) has/have surface profiling on their mutually facing sides (10, 11).

3. A hydraulic bushing according to either of claims 1 and 2, characterized in that the insert (7) is arranged in an elastically flexible manner within the first working chamber (1).

4. A hydraulic bushing according to any of claims 1 to 3, characterized in that the insert (7) is designed as a travel-limiting stop.

5. A hydraulic bushing according to any of claims 1 to 4, characterized in that the insert (7) is composed of a polymeric material.

6. A hydraulic bushing according to any of claims 1 to 5, characterized in that the insert (7) and the outer supporting body (5) bound a fluid passage (12) leading from the first working chamber (1) into the damping channel (3).

## Revendications

1. Manchon à amortissement hydraulique comprenant au moins deux chambres de travail remplies de liquide qui sont reliées l'une à l'autre par un canal d'amortissement d'une manière permettant une circulation, comprenant un corps d'appui intérieur qui est entouré, à une distance radiale, par un corps d'appui extérieur, un corps élastique en matière élastomère étant situé dans la fente formée par la distance et au moins un élément d'insertion produit séparément étant situé dans au moins une des chambres de travail, le corps élastique (6), vu en coupe radiale, ayant une section transversale qui a essentiellement la forme d'un V et limitant la première chambre de travail (1), l'élément d'insertion (7) étant situé à l'intérieur de la première chambre de travail (1) limitée en forme de V et ayant une section transversale radiale qui a essentiellement la forme d'un Ω, caractérisé en ce que l'élément d'insertion (7) est situé dans la première chambre de travail (1) de manière à diviser la première chambre de travail (1) en trois chambres partielles (1.1, 1.2, 1.3) et en ce que les chambres partielles (1.1, 1.2, 1.3) sont reliées les unes aux autres d'une manière permettant une communication par deux ouvertures d'étranglement (8, 9) limitées par le corps élastique (6) et l'élément d'insertion (7).

2. Support à amortissement hydraulique selon la revendication 1, caractérisé en ce que l'élément d'insertion (7) et/ou le corps élastique (6) sont pourvus, sur leurs côtés (10, 11) tournés l'un vers l'autre, d'un profilage superficiel.

3. Support à amortissement hydraulique selon l'une des revendications 1 ou 2, caractérisé en ce que l'élément d'insertion (7) est situé de manière élastique et flexible à l'intérieur de la première chambre de travail (1).

4. Support à amortissement hydraulique selon l'une des revendications 1 à 3, caractérisé en ce que l'élément d'insertion (7) est exécuté en tant que butée limitant la course.

5. Support à amortissement hydraulique selon l'une des revendications 1 à 4, caractérisé en ce que l'élément d'insertion (7) est formé d'une matière polymère.

6. Support à amortissement hydraulique selon l'une des revendications 1 à 5, caractérisé en ce que l'élément d'insertion (7) et le corps d'appui extérieur (5) limitent un passage (12) pour le liquide de la première chambre de travail (1) dans le canal d'amortissement (3).
